# EUROPEAN PATENT APPLICATION

(11) **EP 4 043 371 A1**
(43) Date of publication of application: **17.08.2022**
(21) Application number: 21157431.4
(22) Date of filing: 16.02.2021
(51) Int. Cl.: B65G 47/86

(54) **PASSIVE GRIPPER, CONVEYING APPARATUS HAVING A PASSIVE GRIPPER AND FILLING MACHINE HAVING A CONVEYING APPARATUS WITH A PASSIVE GRIPPER**

(71) Applicant: Sidel Participations, 76930 Octeville-sur-Mer (FR)
(72) Inventor: ALCIATI, Roberto, 43126 Parma (IT)
(74) Representative: Sidel Group

(57) **Abstract**

There is described a passive gripper (1) for a conveying apparatus, the passive gripper (1) being configured to retain a receptacle (2), in particular a bottle (2), and comprising at least a centering body (10) having a centering recess (11) for receiving a portion (7) of the receptacle (2) and two gripping fingers (12) made in one piece with the centering body (10) and configured to interact with the contact portion of the receptacle (2) from two opposite sides thereof so as to lock the receptacle (2) within the centering recess (11). The gripping fingers (12) are deformable so as to allow releasing and insertion of the portion (7) of the receptacle (2) respectively from and into the centering recess (11).

## Description

### TECHNICAL FIELD

The present invention relates to a passive gripper for retaining receptacles, in particular bottles. Advantageously, the passive gripper is designed to be used together with a conveying apparatus, in particular a conveying apparatus of a filling machine, the filling machine being configured to fill the receptacles, in particular the bottles, with a pourable product, in particular a pourable food product.

Preferentially, the present invention also relates to a conveying apparatus, in particular a conveying apparatus of a filling machine, for the advancement of receptacles and having one or more passive grippers for retaining the receptacles.

Advantageously, the present invention also relates to a filling machine for the filling of receptacles and having at least one conveying apparatus, the conveying apparatus being provided with one or more passive grippers for retaining receptacles, in particular bottles.

### BACKGROUND ART

There are known filling machines for the filling of receptacles such as bottles, containers, cans or the like.

A typical filling machine comprises at least one conveying apparatus configured to advance the receptacles along a respective advancement path, at least one inlet conveyor configured to advance the receptacles along an inlet path to the conveying apparatus and an outlet conveyor configured to advance the receptacles along an outlet path and away from the conveying apparatus.

Additionally, the filling machine comprises a plurality of filling units carried by the conveying apparatus and configured to fill the receptacles during their advancement along the respective advancement path.

Furthermore, the conveying apparatus comprises a plurality of grippers, each gripper being configured to retain one respective receptacle during the receptacle's advancement along the advancement path.

Additionally, also the inlet conveyor and the outlet conveyor comprise respective grippers for retaining the receptacles during advancement along respectively the inlet path and the outlet path.

It must be considered that the grippers of the conveying apparatus, the inlet conveyor and the outlet conveyor must ensure not only a safe retaining of the receptacles, but they must also allow a controlled transfer of the receptacles from one respective gripper to another respective gripper as occurring during a transfer of an receptacle from the inlet conveyor to the conveying apparatus and from the conveying apparatus to the outlet conveyor.

The known grippers can be of the active-type, meaning that each such gripper can be actively controlled between a respective retaining configuration at which the gripper is adapted to retain the respective receptacle and a respective open configuration at which the gripper is adapted to release or receive the respective receptacle.

Furthermore, there are known passive grippers. Such grippers do not comprise any active control mechanism; i.e. they are controlled between the retaining configuration and the open configuration by means of forces acting during the transfer of the receptacle from one gripper to another gripper and as a result of the operation of the conveying apparatuses. E.g. one such type of passive gripper comprises two gripping fingers connected to one another by means of a spring and the spring being designed to bias the gripping fingers into the retaining configuration. During the transfer of one respective receptacle the acting forces guarantee that the gripping fingers move into the respective open configuration.

An inconvenience of the known passive and active grippers is seen in that they comprise a significant number of single pieces and come along with a high complexity.

In this context one must consider that each of the single pieces is subject to a putative failure risk.

Furthermore, the complex structure increases also the difficulties with regard to the maintenance of the required hygienic conditions during operation and/or during a cleaning and/or during a sterilization of the filling machines within which the grippers are used.

Therefore, there is a continued desire within the sector to further improve the known grippers.

### DISCLOSURE OF INVENTION

It is therefore an object of the present invention to provide in a straightforward and low-cost manner a gripper for overcoming at least one of the above-mentioned drawbacks.

In particular, it is an object of the present invention to provide in a straightforward and low-cost manner a passive gripper coming along with a simple structure, in particular coming along with decreased risks of failure and/or impeding the staining of liquids on the passive gripper itself.

It is another object of the present invention to provide in a straightforward and low-cost manner a conveying apparatus for overcoming at least one of the above-mentioned drawbacks.

It is another object of the present invention to provide in a straightforward and low-cost manner a filling machine for overcoming at least one of the above-mentioned drawbacks.

According to the present invention, there is provided a passive gripper according to the independent claim.

Further advantageous embodiments are specified in the respective claims being directly and/or indirectly dependent on the independent claim.

According to the present invention, there is also provided a conveying apparatus according to claim 14.

According to the present invention, there is also provided a filling machine according to claim 15.

### BRIEF DESCRIPTION OF THE DRAWINGS

A non-limiting embodiment of the present invention will be described by way of example with reference to the accompanying drawings, in which:
Figure 1 is a perspective view of a passive gripper according to the present invention retaining a receptacle;
Figure 2 is a top view of the passive gripper of Figure 1 while retaining the receptacle;
Figure 3 is an enlarged perspective view of a detail of the passive gripper of Figure 1 while retaining the receptacle, with parts removed for clarity;
Figure 4 is a perspective view of the passive gripper of Figure 1;
Figure 5 is a top view of the passive gripper of Figure 1; and
Figures 6a to 6d are top views of the passive gripper of Figure 1 during varying steps of releasing the receptacle.

### BEST MODES FOR CARRYING OUT THE INVENTION

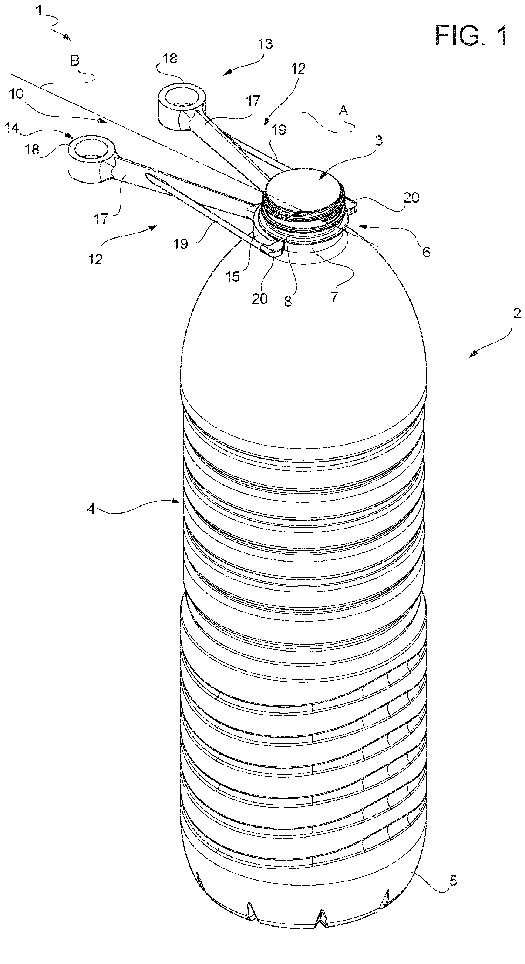

With particular reference to Figure 1, reference number 1 indicates a passive gripper designed to releasably retain a receptacle. In particular, passive gripper 1 is part of a filling machine.

It should be noted that the term "passive" indicates that gripper 1 is void of any active control mechanism, but its function (as will be described in further detail further below) is only based on forces acting through the respective receptacle.

Furthermore, the filling machine may be configured to fill the receptacles with a pourable product, in particular a pourable food product such as carbonated liquids (e.g. sparkling water, soft drinks and beer), non-carbonated liquids (including still water, juices, teas, sport drinks, wine, etc.), emulsions and beverages containing pulps.

The receptacles can be of any type including bottles, jars, vessels, containers, cans or the like, in particular being made of base components, like glass, paper or cardboard, plastics, aluminum, steel, and composites.

In particular, the receptacles may be and/or may be adapted to be filled with a pourable product, in particular a pourable food product, even more particular a liquid or a viscous pourable food product.

In the following, we limit the description to the specific example of (plastic or glass) bottles 2 adapted to be filled with any type of pourable food product such as carbonated liquids (e.g. sparkling water, soft drinks and beer), non-carbonated liquids (including still water, juices, teas, sport drinks, wine, etc.), emulsions and beverages containing pulps. However, it should be clear that the invention also relates to other types of receptacles, such as containers, jars, vessels, cans or the like. It should also be clear that the invention also relates to receptacles, which are adapted to be filled with other kinds of pourable products such as sugar, salt, oils and others, or pourable not food products.

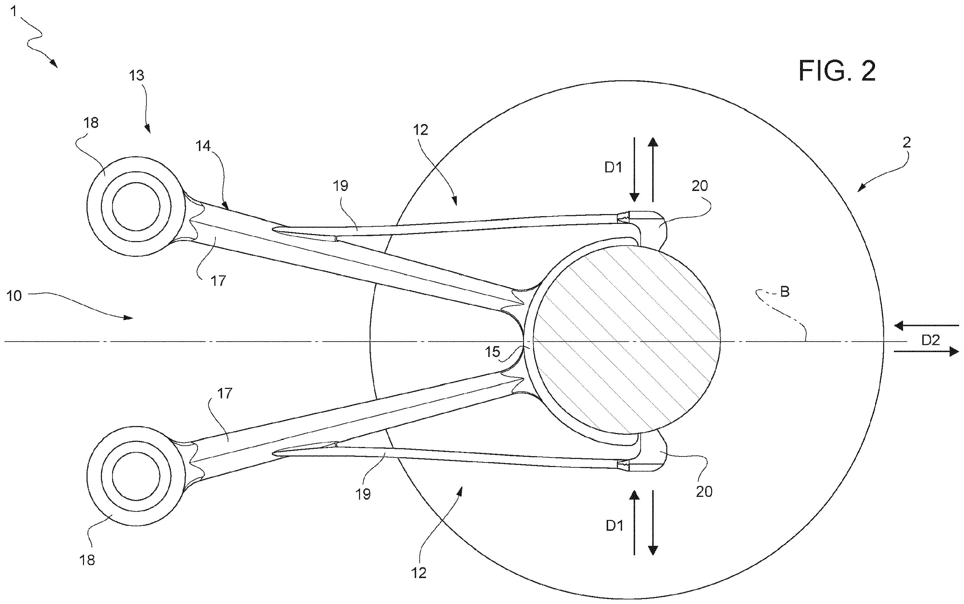

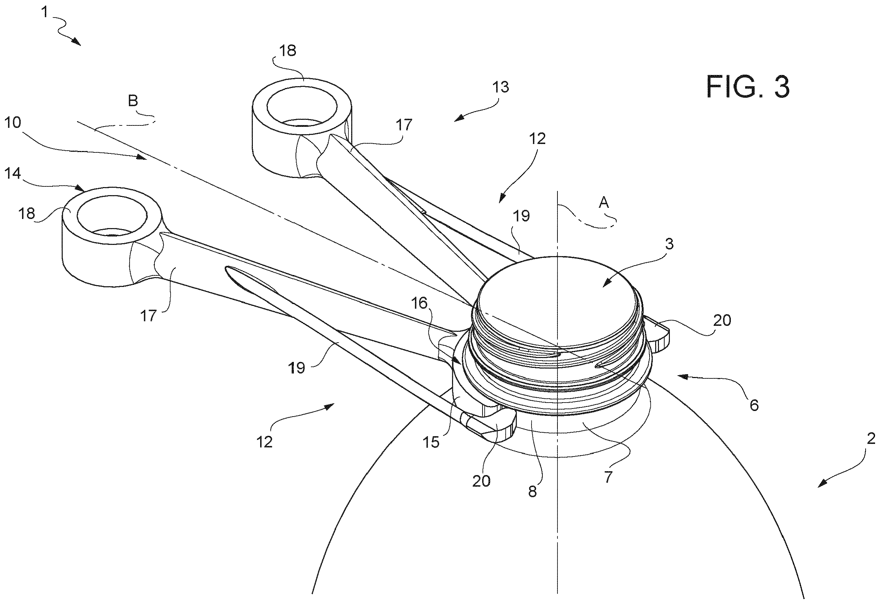

With particular reference to Figures 1 to 3, each bottle 2 may extend along a longitudinal axis A and may comprise a pouring opening 3 allowing for the introduction and the outpouring of the pourable product respectively into and out of bottle 2. Moreover, each bottle 2 may also comprise a hollow main body 4 having a bottom portion 5 and a top portion 6 opposite to bottom portion 5. In particular, top portion 6 may carry pouring opening 3. More specifically, each top portion 6 may be spaced apart from the respective bottom portion 5 along longitudinal axis A.

More specifically, top portion 6 may comprise a neck 7 carrying pouring opening 3. Additionally, top portion 6 may comprise a flange 8. Preferentially, flange 8 may radially protrude from top portion 6, in particular neck 7.

In more detail, the filling machine may comprise at least one conveying apparatus configured to advance bottles 2 along an advancement path.

In addition, the filling may comprise a plurality of filling units mounted to the conveying apparatus and configured to fill at least one respective bottle 2 at a time during its advancement along the advancement path.

Moreover, the conveying apparatus may comprise a plurality of passive grippers 1, each configured to retain one respective bottle 2 during its advancement along the advancement path.

Additionally, each passive gripper 1 may be associated to one respective filling unit, in particular so as to place the respective bottle 2 below the respective filling unit during advancement along the advancement path.

More specifically, the conveying apparatus may comprise a carousel rotatable around a respective rotation axis and peripherally carrying passive grippers 1, and in particular also the filling units.

Even more specifically, passive grippers 1, and in particular also the filling units, are equally spaced around the rotation axis.

Furthermore, the filling machine may also comprise an inlet conveyor, e.g. an inlet star wheel, configured to deliver bottles 2, in particular empty bottles 2, to the conveying apparatus and an outlet conveyor, e.g. an outlet star wheel, configured to receive the bottles 2, in particular the filled bottles 2, from the conveying apparatus.

More specifically, the inlet conveyor may be configured to advance (empty) bottles 2 along an inlet path to a first transfer station at which bottles 2 are transferred from the inlet conveyor to the conveying apparatus and the outlet conveyor may be configured to advance (filled) bottles 2 along an outlet path from a second transfer station at which (filled) bottles 2 are transferred from the conveying apparatus to the outlet conveyor. In particular, the advancement path may extend from the first transfer station to the second transfer station.

In more detail, each one of the inlet conveyor and the outlet conveyor comprises a respective plurality of gripping elements for retaining respectively (empty) bottles 2 during advancement along the inlet path and (filled) bottles 2 during advancement along the outlet path.

According to some possible embodiments, the gripping elements may correspond to passive grippers 1 or alternatively may be of a different type. In other words, according to such an alternative embodiment, each one of the inlet conveyor and the outlet conveyor may comprise a plurality of passive grippers 1 for retaining bottles 2.

In further detail, each (empty) bottle 2 may be transferred, in use, from the respective gripping element of the inlet conveyor to one respective passive gripper 1 of the conveying apparatus at the first transfer station. In other words, in use, the passive grippers 1 receive at the first transfer station (empty) bottles 2.

Additionally, each (filled) bottle 2 may be transferred, in use, from the respective passive gripper 1 to one respective gripping element of the outlet conveyor at the second transfer station.

In the following, we describe one single passive gripper 1 according to the present invention. It must, however, be understood that each passive gripper 1 of the plurality of passive grippers 1 can be structurally equal to the other ones.

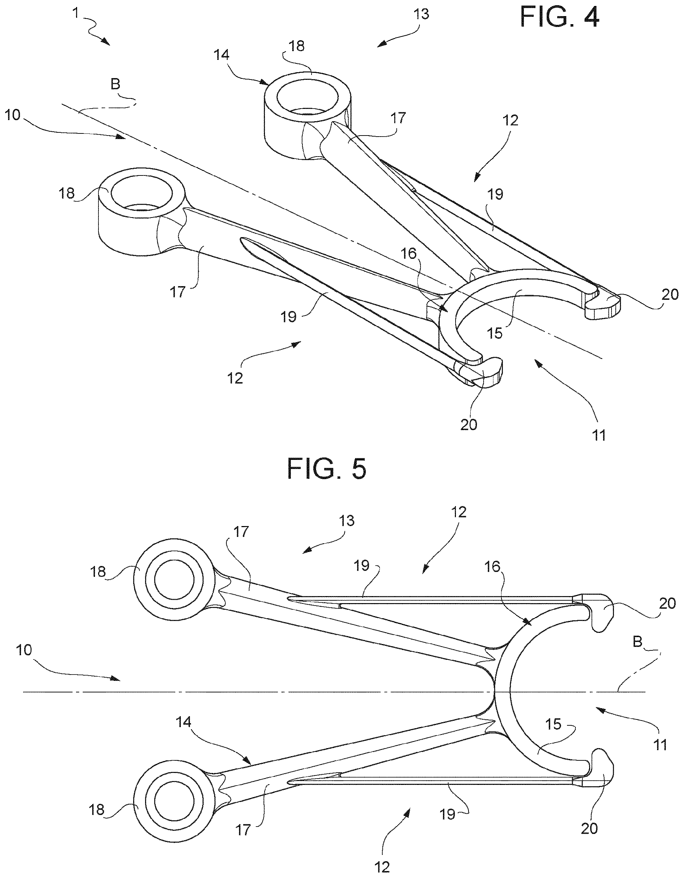

With particular reference to Figures 1 to 6d, passive gripper 1 comprises:
- a centering body 10 having a centering recess 11 for receiving a contact portion of bottle 2; and
- two gripping fingers 12 made in one piece with centering body 10 and configured to interact with the contact portion of bottle 2 from two opposite sides thereof so as to lock the contact portion of bottle 2 within centering recess 11.

Furthermore, gripping fingers 12 are deformable so as to allow releasing and insertion of the contact portion of bottle 2 respectively from and into centering recess 11.

The term "passive" indicates that passive gripper 1 is void of any active control mechanism, but its function of receiving and releasing bottle 2 is solely based on externally acting forces. In more detail, gripping fingers 12 are passive elements, meaning that movement of gripping fingers 12 is not based on additional control mechanisms of passive gripper 1, but is solely a result of the forces acting on gripping fingers 12 through bottle 2.

In particular, gripping fingers 12 by locking the contact portion of bottle 2 guarantee that the respective bottle 2 is retained by passive gripper 1.

Moreover, passive gripper 1 may be realized as a single piece.

In more detail, passive gripper 1, in particular centering body 10, may extend along a central longitudinal axis B. Moreover, passive gripper 1 may radially protrude (i.e. longitudinal axis B radially protrudes) from the conveying apparatus, in particular from the carousel.

Furthermore, centering recess 11 may be arranged at a first end portion of centering body 10 along longitudinal axis B.

Preferentially, passive gripper 1 may be designed such that with bottle 2 being retained by passive gripper 1 (i.e. the contact portion of bottle 2 is locked within centering recess 11 by gripping fingers 12) longitudinal axis B of the centering body 10 and longitudinal axis A of the bottle 2 are transversal, in particular (substantially) perpendicular, to one another.

Moreover, passive gripper 1 may also comprise a mounting portion 13 arranged at a second end portion of centering body 10 opposed to the first end portion (i.e. opposed to centering recess 11) and being configured to allow fixing of passive gripper 1 to the conveying apparatus, in particular the carousel.

Preferentially, with passive gripper 1 being fixed to the conveying apparatus, in particular the carousel, passive gripper 1 presents a (substantially) horizontal orientation, while bottle 2 when being retained by passive gripper 1 presents a (substantially) vertical orientation.

According to the specific embodiment disclosed, gripping fingers 12 may be configured to interact with top portion 6, in particular neck 7.

In particular, centering recess 11 may be configured to receive top portion 6, in particular neck 7. In other words, the contact portion of bottle 2 corresponds to top portion 6, in particular to neck 7.

Furthermore, gripping fingers 12 may passively move between:
- an initial configuration, in particular gripping fingers 12 take in the initial configuration in the absence of a bottle 2; and
- an active configuration at which gripping fingers 12 are designed to interact with the contact portion, in particular top portion 6, even more particular neck 7, of bottle 2 for locking the contact portion, in particular top portion 6, even more particular neck 7, within centering recess 11.

In particular, gripping fingers 12 may be biased in and/or towards the initial configuration.

In particular, elastic forces may act on gripping fingers 12 (for biasing gripping fingers 12 into and/or towards the initial configuration).

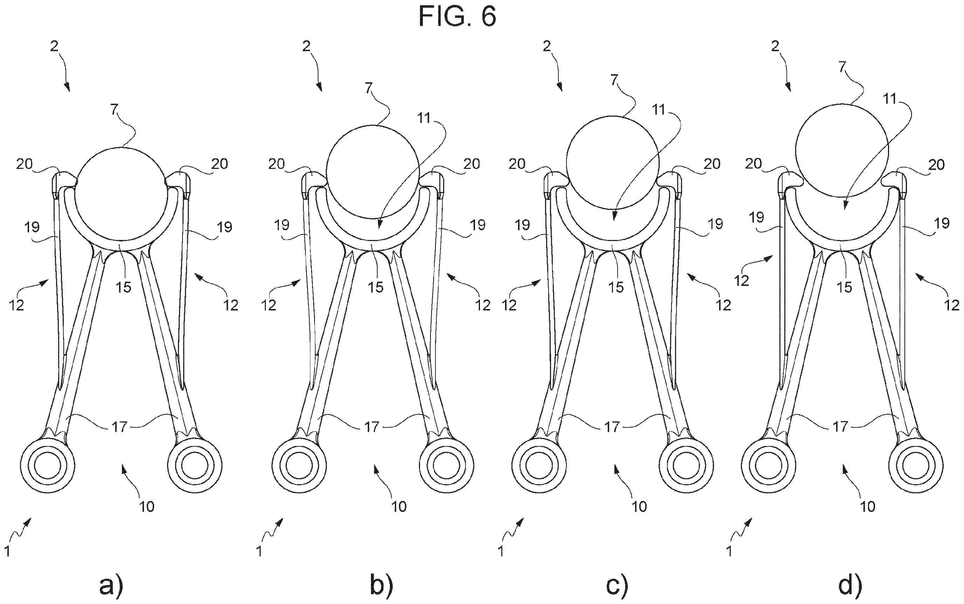

In more detail and with particular reference to Figures 6a to 6d, upon introduction or removal of bottle 2 into or out of centering recess 11, a force acts not only on bottle 2, but also on gripping fingers 12 and as these are deformable gripping fingers 12, they move so as to permit introduction or removal of bottle 2 into or out of centering recess 11.

Preferentially, gripping fingers 12 may be configured such that the introduction or release of bottle 2 into or from centering recess 11 temporarily actuates withdrawal of gripping fingers 12 from one another.

E.g. when considering the sequence from Figures 6a to 6d, one notes that with reference to Figure 6a the contact portion of bottle 2 is placed within centering recess 11 and bottle 2 is retained by passive gripper 1. In particular, gripping fingers 12 are in the active configuration. Additionally, gripping fingers 12 exert a force on the contact portion of bottle 2 as gripping fingers 12 are biased towards the initial configuration.

When removing the contact portion of bottle 2 out of centering recess 11 (see Figures 6b and 6c), gripping fingers 12 move according to the shape of the contact portion of bottle 2 until bottle 2 is fully extracted from centering recess 11. At this point, gripping fingers 12 are biased in the initial configuration (see Figure 6d).

In an analogous manner, when considering the inverse sequence, namely from Figures 6d to 6a which depict the insertion of bottle 2 into centering recess 1, insertion of the contact portion of bottle 2 into centering recess 11 results in movement of gripping fingers 12 as defined by the shape of the contact portion of bottle 2 (see Figures 6c and 6b) and finally with the contact portion of bottle 2 being fully received within centering recess 11, gripping fingers 12 take in the active configuration.

It should be noted that, in use, insertion of the contact portion of bottle 2 into centering recess 11 follows the sequence of Figures 6d to 6a, when bottles 2 are transferred from the inlet conveyor to the conveying apparatus at the first transfer station, and release of contact portion of bottle 2 from centering recess 11 follows the sequence of Figures 6a to 6d, when bottles 2 are transferred from the conveying apparatus to the outlet conveyor at the second transfer station.

In particular, gripping fingers 12 may be deformable into a first direction D1 transversal to longitudinal axis B. In particular, gripping fingers 12 may approach or withdraw from one another.

Moreover, gripping fingers 12 may be the closest to one another when being in the initial configuration.

Furthermore, gripping fingers 12 may be deformable upon application of a force on bottle 2 in a second direction D2 (substantially) parallel to longitudinal axis B and into or from centering recess 11. Thus, first direction D1 and second direction D2 are transversal to one another.

With particular reference to Figures 1 to 6d, centering body 10 may comprise at least one support structure 14 and a delimiting structure 15, the delimiting structure 15 delimiting centering recess 11.

In particular, support structure 14 may carry delimiting structure 15, in particular at a first terminal portion of support structure 14. Additionally, support structure 14 may carry and/or comprise mounting portion 13, in particular at a second terminal portion of support structure 14 opposed to the first terminal portion.

In more detail, delimiting structure 15 may comprise an abutment surface 16 designed to receive and support flange 8.

Preferentially, delimiting structure 15 may present an arc-shaped profile.

In more detail, support structure 14 may comprise at least two supporting arms 17 carrying together delimiting structure 15.

In particular, each supporting arm 17 may be connected to one respective portion of delimiting structure 15. Even more particular, supporting arms 17 may be arranged such not to contact one another.

Moreover, supporting arms 17 may be transversally arranged with respect to one another.

In further detail, supporting arms 17 may describe, in particular together with at least a portion of delimiting structure 15, a V-shaped configuration.

Furthermore, mounting portion 13 comprises at least two mounting rings 18, each one fixed to one respective supporting arm 17. In particular, each mounting ring 18 may be designed to receive a portion of a mounting pin for fixing the respective supporting arm 17 to the conveying apparatus. Each ring 18 may be considered to be a part of a respective supporting arm 17.

With particular reference to Figures 1 to 6d, gripping fingers 12 may be integrally connected to support structure 14. In more detail, each gripping finger 12 may be integrally connected to one respective supporting arm 17.

Moreover, gripping fingers 12 may interpose at least a portion of centering body 10, in particular of support structure 14 and delimiting structure 15, between one another. In particular, gripping fingers 12 interpose a portion of support structure 14 and the whole delimiting structure 15 between one another.

More specifically, gripping fingers 12 may interpose a portion of supporting arms 17 between one another.

According to some preferred non-limiting embodiments, each supporting arm 17 may present an elliptic cross-section profile, in particular when considering a cross-section plane being perpendicular to longitudinal axis B (i.e. longitudinal axis B is a normal of the cross-section plane).

Preferentially, each supporting arm 17 is hollow.

In other words, gripping fingers 12 may be arranged externally outside from centering body 10.

According to some possible non-limiting embodiments, gripping fingers 12 may be hingedly fixed to support structure 14, in particular such to angularly move upon insertion or removal of bottle 2 into or from centering recess 11. In particular, upon the respective angular movement of each gripping finger 12, gripping finger 12 moves into first direction D1.

Each gripping finger 12 comprises a respective elongated portion 19. The elongated portion 19 of each gripping finger 12 is hinged to a respective supporting arm 17. The elongated portion 19 of each gripping finger 12 is virtually hinged to a respective supporting arm 17, in the sense that the hinge is made by material of the supporting rod or supporting bar or supporting beam and/or by material of gripping rod or gripping bar or gripping beam. Each gripping finger 12 comprises an interaction portion 20 configured to interact with the contact portion of the receptacle 2 for locking the contact portion of the receptacle 2 within the centering recess 11.

The elongated portion 19 of each gripping finger 12 branches from the respective supporting arm 17.

The elongated portion 19 of each gripping finger 12 is spatially interposed between the respective supporting arm 17 and the respective interaction portion 20.

In this way the manufacturing process of the passive gripper 1 is simplified and/or the material amount required for the gripper 1 is lowered. The elongated portion 19 of each gripping finger 12 comprises a respective gripping beam or gripping rod or gripping bar. Each supporting arm 17 comprises a respective supporting beam or supporting rod or supporting bar.

Each gripping beam or gripping rod or gripping bar is virtually hinged to a respective supporting beam or supporting bar or supporting rod, or is virtually hinged to a respective ring 18.

Each gripping beam or gripping rod or gripping bar branches from the respective supporting beam or supporting bar or supporting rod, transversally with respect to the longitudinal extension or development of said supporting beam or supporting rod or supporting bar.

In this way the amount of material is furtherly reduced and the external profile of the cross section of the elongated portion 19 of each gripping finger 12 and/or the external profile of the cross section of each supporting arm 17 can be adjusted or selected to reduce the risk of deposit of any material on the gripper 1. In this way the risk of liquids staining on passive gripper 1 is reduced, to improve the hygiene and the ease of cleaning and/or sterilization of the gripper 1.

For example, to maximize these effects, each supporting arm 17 comprises a supporting rod and each elongated portion 19 comprises a gripping rod.

The elongated portions 19 of the gripping fingers 12 are arranged at opposite sides of said centering body 10 and are located externally outside of said centering body 10.

Each gripping beam or gripping rod or gripping bar branches from the external lateral surface of the respective supporting beam or supporting rod or supporting bar.

In this way the gripping fingers 12 are located not too distant from the recess 11, to reduce the amount of material needed, and not too close to the recess 11, to be sufficiently deformable and/or reduce the stress required for the deformation.

The cross section of each gripping rod or gripping beam or gripping bar, taken on a plane which is transversal to the respective longitudinal development, presents an external profile which is at least partially curved.

The cross section of each supporting rod or supporting bar or supporting beam, taken on a plane which is transversal to the respective longitudinal development, presents an external profile which is at least partially curved.

In this way the drainage of possible liquids is improved, to reduce the risk of liquids staining on the passive gripper 1.

Said external profile of the cross section of each gripping beam or gripping rod or gripping bar or of the cross section of each supporting beam or supporting rod or supporting bar can be elliptical, to optimize the above-mentioned effects.

Each gripping rod or gripping beam or gripping bar is deformable by a bending strain, to allow said release and insertion. In this way the shape of the elongated portion 19 of each gripping finger 12 is exploited to its maximum possibilities for obtaining the deformation.

In particular, each interaction portion 20 may define a free end of the respective gripping finger 12, for example a free end of the respective gripping rod or gripping beam or gripping bar.

Moreover, each interaction portion 20 may comprise, in particular may consist in, a hook element.

In further detail, each interaction portion 20 or hook element may be configured to at least partially protrude into and/or towards centering recess 11 for locking the contact portion of bottle 2 within centering recess 11.

Preferentially, each gripping finger 12 is deformable such that the respective interaction portion 20 adopts a proximal position and a distal position, with respect to longitudinal axis B) of the centering body 10, respectively in the absence and presence of the contact portion of bottle 2 within centering recess 11.

As mentioned above, gripping fingers 12 may be arranged in the initial configuration and the active configuration. In particular, interaction portions 20 may adopt said proximal position and distal position with gripping fingers 12 being arranged in respectively the initial configuration and the active configuration.

According to some possible non-limiting embodiments, passive gripper 1 is obtained through adaptive manufacturing and/or a 3d printing process and/or from a metal material. For example, passive gripper 1 can be obtained through a 3d printing process and from at least one metal material. The configuration of the passive gripper 1 is particularly designed for simplifying the process of 3d printing process, in particular the 3d printing process made on at least one metal material.

In use, the filling machine fills bottles 2 with the pourable product. The conveying apparatus advances bottles 2 along the advancement path and the filling units deliver the pourable product into bottles 2 during their advancement along the advancement path.

While advancing along the advancement path, each bottle 2 is retained by one respective passive gripper 1. In particular, the contact portion of the respective bottle 2 is placed within the centering recess 11 and the respective gripping fingers 12 lock the portion of the respective bottle 2 within the centering recess 10.

Furthermore, each (empty) bottle 2 is transferred from the inlet conveyor to one respective passive gripper 1 at the first transfer station. The forces resulting from the operation of the conveying apparatus and the inlet conveyor guarantee the needed force (into second direction D2) to place the contact portion of bottle 2 within centering recess 11. Thereby, the respective gripping fingers 12 move so as to allow the insertion of the portion of the respective bottle 2.

Additionally, each (filled) bottle 2 is transferred from the respective passive gripper 1 to the outlet conveyor at the second transfer station. The forces resulting from the operation of the conveying apparatus and the outlet conveyor guarantee the needed force (in the second direction D2) to remove the contact portion of bottle 2 from centering recess 11. Thereby, the respective gripping fingers 12 move so as to allow the release of the contact portion of bottle 2.

The advantages of passive gripper 1 according to the present invention will be clear from the foregoing description.

In particular, passive gripper 1 is of a simple and easy construction reducing the failure risk.

Another advantage resides in that passive gripper 1 is realized as a single piece defining another reason for a reduced failure risk.

Furthermore, the risk of liquids staining on passive gripper 1 are minor. This improves the hygienic and the ease of cleaning and/or sterilization.

Additionally, by providing support arms 17 and/or the gripping fingers 12 with an elliptical cross-sectional profile it is possible to obtain on the one side a rigid part and on the other side a part, which can be easily cleaned and/or sterilized and/or which avoids the staining of liquids.

Clearly, changes may be made to passive gripper 1 and/or the conveying apparatus and/or the filling machine as described herein without, however, departing from the scope of protection as defined in the accompanying claims.

## Claims

1. Passive gripper (1) for a conveying apparatus, the passive gripper (1) being configured to retain a receptacle (2), in particular a bottle (2), and comprising at least:
- a centering body (10) having a centering recess (11) for receiving a contact portion (7) of the receptacle (2); and
- two gripping fingers (12) made in one piece with the centering body (10) and configured to interact with the contact portion (7) of the receptacle (2) from two opposite sides thereof so as to lock the contact portion (7) within the centering recess (11);
wherein the gripping fingers (12) are deformable so as to allow releasing and insertion of the contact portion (7) respectively from and into the centering recess (11);
wherein the centering body (10) comprises at least one support structure (14) and a delimiting structure (15) delimiting the centering recess (11);
wherein the support structure (14) carries the delimiting structure (15);
wherein the gripping fingers (12) are integrally connected to the support structure (14);
wherein the support structure (14) comprises two supporting arms (17);
wherein the supporting arms (17) carry together the delimiting structure (15);
wherein each gripping finger (12) comprises an elongated portion (19) hinged to a respective supporting arm (17) and an interaction portion (20) configured to interact with the contact portion (7) of the receptacle (2) for locking the contact portion (7) of the receptacle (2) within the centering recess (11), the elongated portion (19) of each gripping finger (12) being spatially interposed between the respective supporting arm (17) and the respective interaction portion (20);
wherein the elongated portion (19) of each gripping finger (12) branches from the respective supporting arm (17) .

2. Passive gripper according to claim 1, wherein:
- each elongated portion (19) comprises a gripping beam or a gripping rod or a gripping bar, and each supporting arm (17) comprises a supporting beam or a supporting rod or a supporting bar;
- each gripping beam or gripping rod or gripping bar branches from a respective supporting beam or supporting bar or supporting rod, transversally with respect to the longitudinal extension or development of said respective supporting beam or supporting rod or supporting bar.

3. Passive gripper (1) according to claim 2, wherein:
- the elongated portions (19) of the gripping fingers (12) are arranged at opposite sides of said centering body (10) and are located externally outside of said centering body (10);
- each gripping beam or gripping rod or gripping bar branches from the external lateral surface of the respective supporting beam or supporting rod or supporting bar.

4. Passive gripper (1) according to claim 2 or 3, wherein:
- the cross section of each gripping beam or gripping rod or gripping bar, taken on a plane which is transversal to the respective longitudinal development, presents an external profile which is at least partially curved; and/or
- the cross section of each supporting beam or supporting rod or supporting bar, taken on a plane which is transversal to the respective longitudinal development, presents an external profile which is at least partially curved.

5. Passive gripper (1) according to claim 4, wherein said profile is elliptical.

6. Passive gripper (1) according to any of claims from 2 to 5, wherein each gripping rod or gripping bar or gripping beam is deformable by a bending strain, to allow said release and insertion.

7. Passive gripper according to any of the previous claims, wherein the centering body (10) extends along a central longitudinal axis (B);
wherein the gripping fingers (12) are deformable into a first direction (D1) transversal to the longitudinal axis (B) ;
wherein the gripping fingers (12) are deformable upon application of a force on the receptacle (2) in a second direction (D2) substantially parallel to the longitudinal axis (B) and into or from the centering recess (11);
each gripping finger (12) is deformable such that the interaction portion (20) adopts a proximal position and a distal position with respect to said longitudinal axis (B), respectively in the absence and presence of the contact portion of a receptacle (2) within the centering recess (11) .

8. Passive gripper according to any one of the preceding claims, wherein the gripping fingers (12) interpose at least portions of both the supporting arms (17) between one another.

9. Passive gripper according to any of the previous claims, wherein the interaction portion (20) is configured to at least partially protrude towards or into the centering recess (11) for locking the receptacle (2) within the centering recess (11).

10. Passive gripper (1) according to any of the previous claims, wherein the gripper (1) is obtained through a 3d printing process and/or by means of at least one metal material.

11. Conveying apparatus for the advancement of receptacles (2) along an advancement path and comprising one or more passive grippers (1) according to any one of the preceding claims;
wherein each passive gripper (1) is configured to retain one respective receptacle (2) during advancement of the respective receptacle (2) along the advancement path.

12. Filling machine for the filling of receptacles (2) with a pourable product, comprising at least one conveying apparatus according to claim 11.
